# EUROPÄISCHE PATENTANMELDUNG

(11) **EP 2 515 021 A2**
(43) Veröffentlichungstag der Anmeldung: **24.10.2012**
(21) Anmeldenummer: 12154155.1
(22) Anmeldetag: 07.02.2012
(51) Int. Cl.: F16L 37/084, F16L 37/56

(54) **Druckminderer-Filter Anordnung mit Leckageschutz**

(30) Priorität: 18.04.2011 DE 202011000917 U
(71) Anmelder: HANS SASSERATH & CO KG, 41352 Korschenbroich (DE)
(72) Erfinder: Hecking, Willi, 41372 Niederkrüchten-Elmpt (DE)
(74) Vertreter: Weisse, Renate

(57) **Zusammenfassung**

Eine Verbindungsanordnung zum Verbinden eines ersten wasserführenden Bauteils (10, 12) mit einem zweiten wasserführenden Bauteil (10, 12), welche beide in einem Gehäuse einen Zentralkanal (26) und einen um den Zentralkanal herum angeordneten Ringkanal (28) aufweisen, dadurch gekennzeichnet, dass die zu verbindenden Bauteile jeweils einen inneren (30, 60) und einen äußeren (32, 62), konzentrisch angeordneten Gehäusestutzen aufweisen, welche den Zentralkanal und den Ringkanal bilden; der innere Gehäusestutzen (60) eines der Bauteile einen kleineren Außendurchmesser aufweist und in den inneren Gehäusestutzen (30) des anderen Bauteils einsteckbar ist; der äußere Gehäusestutzen (62) eines der Bauteile einen kleineren Außendurchmesser aufweist und in den äußeren Gehäusestutzen (32) des anderen Bauteils einsteckbar ist; der äußere Gehäusestutzen (62) mit dem kleineren Durchmesser im Verbindungsbereich eine innere Ringnut (74) aufweist; der äußere Gehäusestutzen (32) mit dem größeren Durchmesser im Bereich der Ringnut wenigstens einen Durchbruch (36) aufweist, in welchen wenigstens ein Rastelement (38) derart radialbeweglich und unter einer radialen Vorspannung eingesetzt ist, dass das Rastelement in die innere Ringnut einrastet, wenn die Bauteile zum Verbinden ineinander gesteckt werden.

## Beschreibung

### Technisches Gebiet

Die Erfindung betrifft eine Verbindungsanordnung zum Verbinden eines ersten wasserführenden Bauteils mit einem zweiten wasserführenden Bauteil, welche beide in einem Gehäuse einen Zentralkanal und einen um den Zentralkanal herum angeordneten Ringkanal aufweisen.

Wasserführende Bauteile sind beispielsweise Anschlussarmaturen zum Anschließen von Filtern, Druckminderern, Druckminderer-Filter-Kombinationen, Einrichtungen zur Wasserenthärtung, Wasserbehandlungseinrichtungen und dergleichen.

### Stand der Technik

Die Verbindung zwischen der Anschlussarmatur und dem Gerät erfolgt häufig über Flansche. Der Zentralkanal und der Ringkanal münden in einem flächigen, ebenen Flansch an wohl definierter Stelle. Der zugehörige Gegenflansch wird mittels Schrauben mit dem Flansch verschraubt. Es ist ferner eine Ringdichtung vorgesehen. Bekannte Flansche sind aus Messing gefertigt. Es ist fernder bekannt, derartige Verbindungen mit einer Überwurfmutter herzustellen. Auch hier bestehen die Überwurfmutter und die Gehäuse der Bauteile aus Messing. Zum Festziehen der Schrauben oder der Überwurfmutter ist Zeit und ein Werkzeug erforderlich.

### Offenbarung der Erfindung

Es ist Aufgabe der Erfindung, eine Verbindung zwischen zwei wasserführenden Bauteilen der eingangs genannten Art zu schaffen, die kostengünstig herstellbar ist und schnell hergestellt wird.

Erfindungsgemäß wird die Aufgabe dadurch gelöst, dass
(a) die zu verbindenden Bauteile jeweils einen inneren und einen äußeren, konzentrisch angeordneten Gehäusestutzen aufweisen, welche den Zentralkanal und den Ringkanal bilden;
(b) der innere Gehäusestutzen eines der Bauteile einen kleineren Außendurchmesser aufweist und in den inneren Gehäusestutzen des anderen Bauteils einsteckbar ist;
(c) der äußere Gehäusestutzen eines der Bauteile einen kleineren Außendurchmesser aufweist und in den äußeren Gehäusestutzen des anderen Bauteils einsteckbar ist;
(d) der äußere Gehäusestutzen mit dem kleineren Durchmesser im Verbindungsbereich eine innere Ringnut aufweist;
(e) der äußere Gehäusestutzen mit dem größeren Durchmesser im Bereich der Ringnut wenigstens einen Durchbruch aufweist, in welchen wenigstens ein Rastelement derart radialbeweglich und unter einer radialen Vorspannung eingesetzt ist, dass das Rastelement in die innere Ringnut einrastet, wenn die Bauteile zum Verbinden ineinander gesteckt werden.

Die Gehäusestutzen münden nicht mehr in einem ebenen Flansch, sondern werden mit den korrespondierenden Gehäusestutzen zusammengesteckt. Zwischen den zusammengesteckten Gehäusestutzen kann eine Ringdichtung in einer Nut vorgesehen sein.

Die Verbindung ist frei um die Verbindungsachse drehbar. Dadurch kann die Installation auch nachträglich an die räumlichen Gegebenheiten angepasst werden. Es sind keine Werkzeuge erforderlich. Die Verbindung wird durch einfaches Aufstecken hergestellt. Das Rastelement rastet in der Nut eines der aufgesteckten Bauteile ein. Dadurch ist die Verbindung gegen unbeabsichtigtes Lösen gesichert. Die Verbindung erlaubt die Verwendung von Kunststoffkomponenten, da keine Werkzeuge eingesetzt werden und keine größeren Kräfte auf das Gehäuse der Bauteile ausgeübt werden.

In einer bevorzugten Ausgestaltung der Erfindung sind die Durchbrüche im äußeren Gehäusestutzen mit dem größeren Durchmesser im Bereich einer äußeren Ringnut an der Außenseite des äußeren Gehäusestutzens vorgesehen und ein elastischer Ring ist in der äußeren Ringnut vorgesehen, welcher die Vorspannung an dem Rastelement erzeugt. Vorzugsweise sind mehrere Rastelemente vorgesehen. Insbesondere können vier Rastelemente vorgesehen sein, die gleichmäßig über den Umfang verteilt sind. Der elastische Ring kann gegen äußere Einwirkungen mit einem weiteren Ring geschützt werden, der über den elastischen Ring aufgesteckt wird.

In einer weiteren Ausgestaltung der Erfindung sind das Rastelement und/oder der äußere Gehäusestutzen mit dem kleineren Durchmesser zum erleichterten Einstecken angeschrägt. Dadurch rutscht das Rastelement über den Gehäusestutzen und in die Ringnut.

In einer besonders bevorzugten Ausgestaltung der Erfindung sind Anzeigemittel vorgesehen, welche anzeigen, wenn das Rastelement in der inneren Ringnut einrastet. Die Anzeigemittel können einen inneren Ring umfassen, welcher wenigstens einen an einer sich in Umfangsrichtung erstreckenden, radialbeweglichen Zunge befestigten Vorsprung im gleichen Winkelbereich wie das Rastelement aufweist und einen äußeren Ring mit einer Durchbruch im Bereich des Vorsprungs, in welchem der Vorsprung versenkt ist, wenn das Rastelement in der inneren Ringnut einrastet und über welchen der Vorsprung nach außen vorsteht, wenn das Rastelement nicht eingerastet ist. Dabei hebt das Rastelement das Ende der Zunge von unten etwas an, solange es noch nicht in der inneren Ringnut eingerastet ist. Die Zunge wird dabei etwas nach außen hochgebogen. Die Ringe haben gleichzeitig eine Schutzfunktion gegen äußere Einwirkungen auf den elastischen Ring.

Zumindest eines der Bauteile und/oder zumindest eines Komponenten aus der Gruppe bestehend aus Rastelement, innerer Ring und äußerer Ring kann aus Kunststoff gefertigt sein. Kunststoff ist erheblich kostengünstiger, als Messing, welches üblicherweise in diesem Bereich verwendet wird.

Eines der Bauteile kann eine Anschlussarmatur zur Installation in einer Trinkwasserrohrleitung sein. Es können beispielsweise folgende Bauteile an die Anschlussarmatur angeschlossen werden: Filter, Einrichungen zur Wasserenhärtung, Druckminderer, Druckminderer-Filterkombination, Sicherheitsarmaturen für Heizungseinrichtungen. Das Gehäuse dieser Bauteile kann bei dieser Verbindungsart aus Kunststoff gefertigt sein. Es versteht sich, dass jedes Wasserbehandlungsgerät und jede Sicherheits- und/oder Regelarmatur an eine solche Anschlussarmatur angeschlossen werden kann. Die Verbindung ist auch für sogenannte "Sandwich"-Anordnungen geeignet, bei welchen mehrere wasserführende Bauteile hintereinandergeschaltet werden.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist eine teilsweise geschnittene Darstellung einer Anschlussarmatur mit einem daran angeschlossenen Filter.
- Fig.2: ist eine Explosionsdarstellung der Anordnung aus Figur 2.
- Fig.3: zeigt den Verbindungsbereich zwischen Anschlussarmatur und Filter mit eingerastetem Rastelement im Detail.
- Fig.4: zeigt den Verbindungsbereich zwischen Anschlussarmatur und Filter im Detail kurz bevor das Rastelement einrastet und kurz bevor die Verbindung vollständig hergestellt ist.
- Fig.5: ist ein Querschnitt durch den Verbindungsbereich zwischen Anschlussarmatur und Filter entlang einer Schnittebene quer zur Verbindungsachse.
- Fig.6: ist eine perspektivische, gesonderte Darstellung des inneren Rings zur Anzeige, ob die Verbindung vollständig hergestellt ist und die Rastelemente eingerastet sind.

### Beschreibung des Ausführungsbeispiels

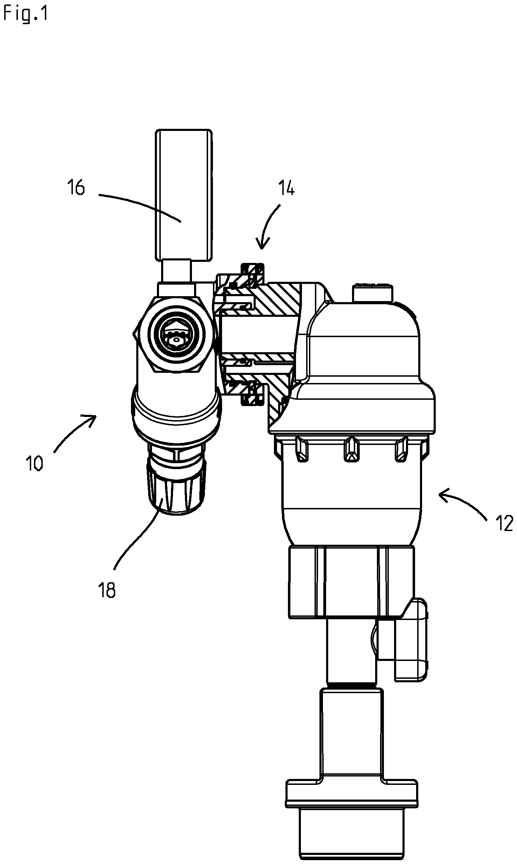

Figur 1 zeigt eine allgemein mit 10 bezeichnete Anschlussarmatur. Die Anschlussarmatur 10 wird in eine nicht dargestellte, herkömmliche Trinkwasserrohrleitung eingebaut. Die vorliegende Anschlussarmatur 10 ist mit einem Manometer 16 und einem Druckminderer 18 versehen. Diese sind im vorliegenden Ausführungsbeispiel vorgesehen, je nach Anwendung für die Erfindung aber nicht zwingend erforderlich. Es können auch einfachere Anschlussarmaturen oder Anschlussarmaturen mit weiteren Komponenten verwendet werden, wie sie bei Armaturen im Heizungs- und Trinkwasserbereich üblich sind.

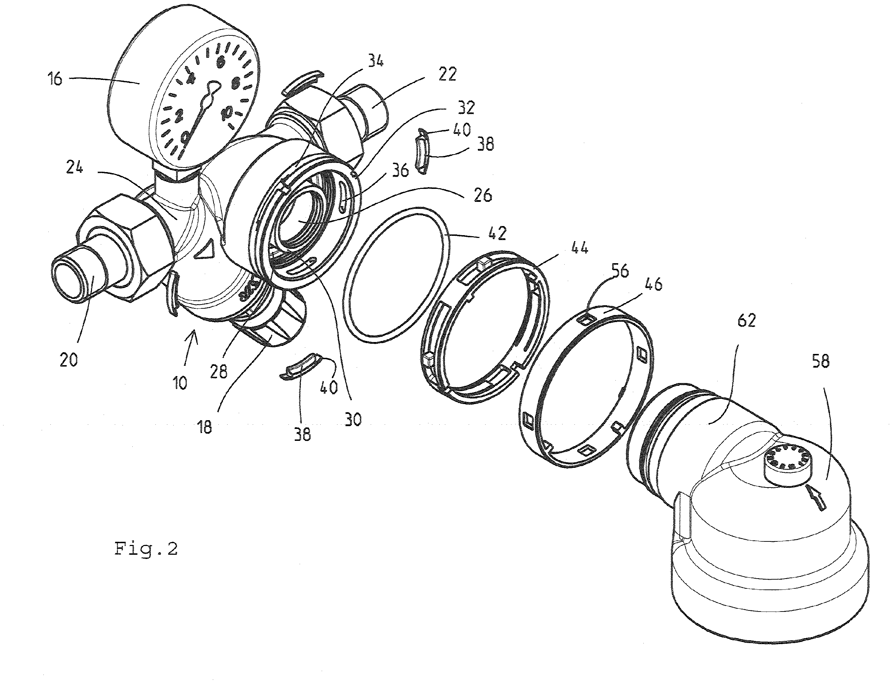

An die Anschlussarmatur 10 ist ein herkömmlicher Filter 12 angeschlossen. Der Verbindungsbereich 14 zwischen der Anschlussarmatur 10 und dem Filter 12 ist in Figur 1 im Schnitt dargestellt. Figur 2 zeigt den Verbindungsbereich 14 und seine Komponenten als Explosionsdarstellung.

Die Anschlussarmatur 10 ist aus Messing gefertigt und wird mit einem Eingang 20 und einem Ausgang 22 auf übliche Weise in einer Rohrleitung installiert. Eingang 20 und Ausgang 22 werden von Stutzen gebildet, welche an ein Gehäuse 24 angeformt sind. Der Eingang 20 mündet in einem Zentralkanal 26. Um den Zentralkanal 26 herum ist ein Ringkanal 28 gebildet. Der Ringkanal 28 ist auf bekannte Weise mit dem Ausgang 22 verbunden.

Der Zentralkanal 26 wird von einem inneren Gehäusestutzen 30 gebildet. Der Ringkanal 28 wird von einem äußeren Gehäusestutzen 32 gebildet, der koaxial um den inneren Gehäusestutzen 30 angeordnet ist. Im äußeren Gehäusestutzen 32 ist außen eine durchgehende äußere Ringnut 34 vorgesehen. Vier sich in Umfangsrichtung erstreckende, längliche Durchbrüche 36 sind gleichmäßig über den Umfang verteilt in der äußeren Ringnut 34 vorgesehen.

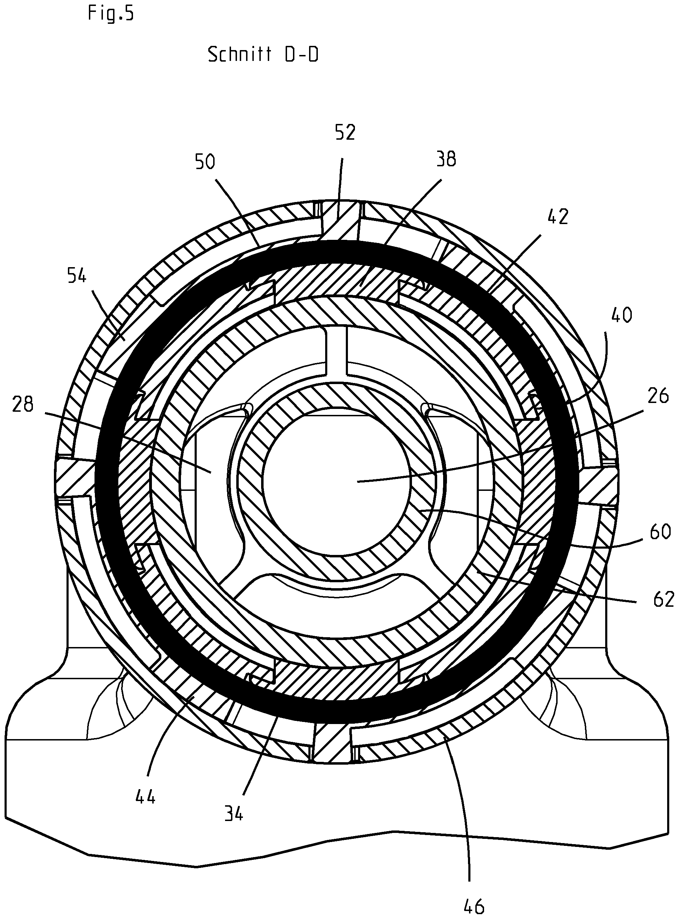

In jeden der Durchbrüche 36 sind Rastelemente 38 eingesteckt. Die Rastelemente 38 haben einen Rand 40, welcher auf dem Boden der äußeren Ringnut 34 aufliegt. Dieser ist gut in Figur 5 zu erkennen. Dadurch kann das Rastelement 38 nicht nach innen durch den zugehörigen Durchbruch 36 hindurchrutschen. Über die eingesteckten Rastelemente 38 wird ein elastischer Ring 42 in die äußere Ringnut 34 eingelegt. Mit dem elastischen Ring 42 werden die Rastelemente 38 nach innen gedrückt und vorgespannt.

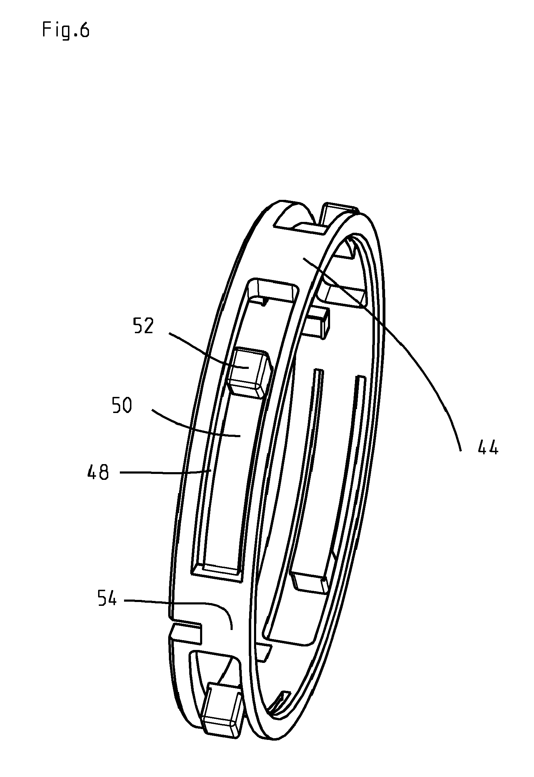

Auf den äußeren Gehäusestutzen 32 mit dem elastischen Ring 42 wird eine Ringanordnung mit einem inneren Ring 44 und einem äußeren Ring 46 aufgeschoben. Der innere Ring 44 ist in Figur 6 noch einmal separat im Detail dargestellt. Der innere Ring weist vier Durchbrüche 48 auf. Es versteht sich, dass auch eine andere Anzahl von Durchbrüchen 48 vorgesehen sein kann. Die radialen Durchbrüche 48 sind langgestreckt und erstrecken sich in Umfangsrichtung. Im Bereich der Durchbrüche sind Zungen 50 vorgesehen. Diese sind in Figur 5 gut zu erkennen. Am freien Ende der Zungen 50 sind jeweils quaderförmige Vorsprünge 52 angeordnet. Es versteht sich, dass auch eine andere Form als Quader vorgesehen sein kann. Das andere Ende der Zunge ist an den zwischen den Durchbrüchen 48 befindlichen Brücken 54 angeformt. Es versteht sich, dass die Zunge auch auf andere Weise befestigt sein kann. Bei dieser Anordnung sind die quaderförmigen Vorsprünge 52 etwas radialbeweglich.

Auf den inneren Ring 44 ist der äußere Ring 46 aufgeschoben. Der äußere Ring 46 weist im Bereich der quaderförmigen Vorsprünge 52 Durchbrüche 56 auf. Im übrigen liegt der äußere Ring 46 auf dem inneren Ring 44 auf. Lediglich die Zungen 50 sind etwas dünner ausgeführt, so dass sie in radialer Richtung um eine geringfügige Strecke beweglich sind.

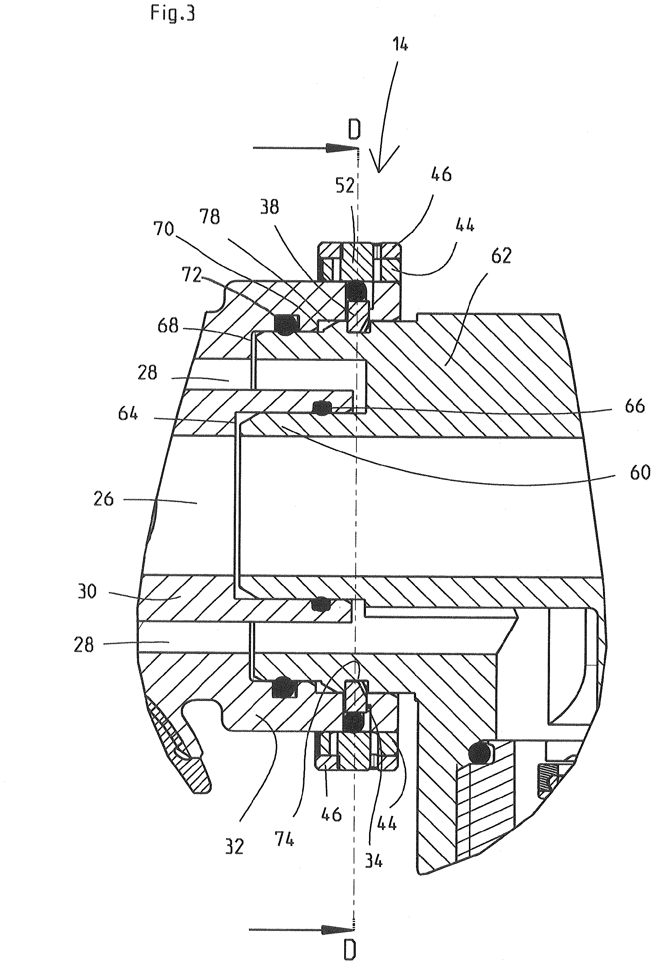

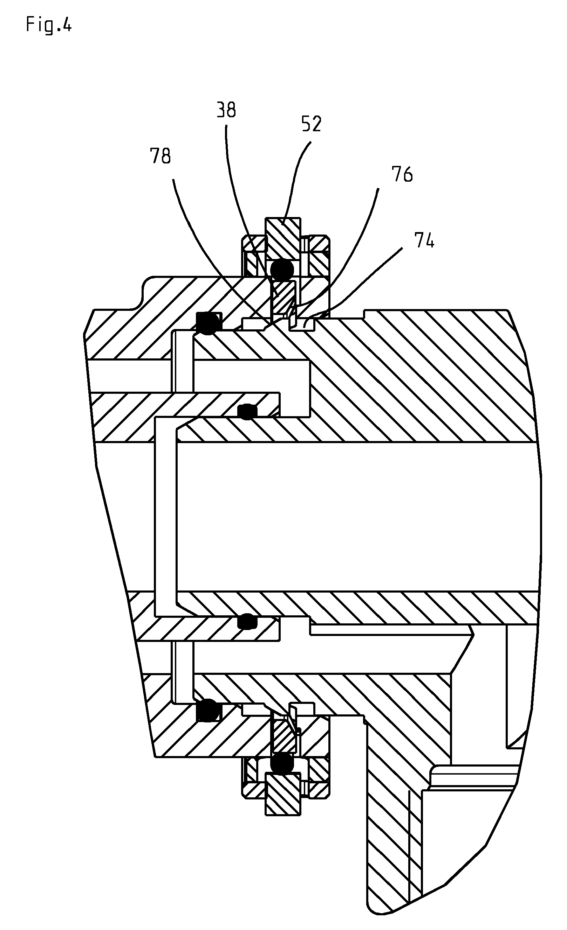

Das Gehäuse 58 des Filters 12 weist korrespondierende Gehäusestutzen 60 und 62 auf. Dies ist insbesondere in Figur 3 und 4 gut zu erkennen. Damit kann der Filter 12 mit dem Anschlussstück 10 auf nachfolgend beschriebene Weise verbunden werden.

Der innere Stutzen 30 hat an seinem freien Ende einen etwas vergrößerten Innendurchmesser. Dadurch wird eine Ringschulter 64 gebildet. Der korrespondierende innere Stutzen 60 des Filters hat einen Außendurchmesser, der an diesen vergrößerten Innendurchmesser angepasst ist. Der innere Stutzen 60 kann daher bis zur Ringschulter 64 in den inneren Stutzen 30 der Anschlussarmatur 10 eingesteckt werden. Der innere Stutzen 30 der Anschlussarmatur 10 weist innen eine Ringnut auf, in welche eine Dichtung 66 eingesetzt ist. Dadurch wird der innere Stutzen 60 des Filters gegenüber den inneren Stutzen 30 der Anschlussarmatur 10 abgedichtet. Beide inneren Stutzen 30, 60 haben im übrigen Bereich den gleichen Innendurchmesser, so dass ein durchgängiger Zentralkanal 26 gebildet wird.

Der äußere Stutzen 32 der Anschlussarmatur 10 hat an seinem freien Ende einen in zwei Stufen etwas vergrößerten Innendurchmesser. Dadurch werden zwei Ringschultern 68 und 70 gebildet. Der äußere Stutzen 62 des Filters hat eine äußere Formgebung, welchean diese Formgebung angepasst ist. In dem innenliegenden Bereich des Stutzens 32 mit vergrößertem Durchmesser ist eine Ringnut vorgesehen. In der Ringnut ist ein Dichtring 72 angeordnet. Dadurch wird der äußere Stutzen 62 des Filters gegenüber dem äußeren Stutzen 32 der Anschlussarmatur 10 abgedichtet. Beide äußeren Stutzen 32, 62 haben im übrigen Bereich den gleichen Innendurchmesser, so dass ein durchgängiger Ringkanal 28 gebildet wird.

In dem Bereich mit dem größten Innendurchmesser am freien Ende des äußeren Stutzes 32 der Anschlussarmatur 10 ist die äußere Ringnut 34 mit den Rastelementen 38 und dem elastischen Ring 42 vorgesehen. Der Stutzen 62 des Filters weist eine innere Ringnut 74 auf, welche in verbundenem Zustand unmittelbar unter der äußeren Ringnut 34 angeordnet ist. Diese Ringnut 74 ist in Figur 4 gut zu erkennen.

Zum Verbinden werden der innere und der äußere Gehäusestutzen 60 und 62 in das freie Ende des inneren und äußeren Gehäusestutzens 30 und 32 eingesteckt. Dabei wird das Rastelement 38 gegen die Vorspannung des elastischen Rings 42 solange nach außen gedrückt, bis das Rastelement 38 vollständig in die innere Ringnut 74 einrastet. Zur Erleichterung des Einschiebens sind die äußeren Kanten 76 der Rastelemente 38 und die äußeren Kanten 78 der Ringschulter, die durch den vergrößerten Durchmesser des äußeren Stutzens 62 des Filters entsteht, angeschrägt.

Figur 4 zeigt die Situation, bei der die Rastelemente 38 noch nicht in der Ringnut 74 eingerastet sind. Man erkennt, dass die Rastelemente 38 etwas radial nach außen verschoben sind. Figur 3 und 5 zeigen die Situation, bei der die Rastelemente 38 in der Ringnut 74 eingerastet sind. Man erkennt, dass die Rastelemente 38 durch den elastischen Ring radial nach innen in die Ringnut 74 hineingedrückt werden.

Radial ausserhalb der Rastelemente 38 und des elastischen Rings 42 sind die Vorsprünge 52 angeordnet. Wenn das Rastelement 38 etwas nach außen verschoben ist, wird der darüberliegende Vorsprung 52 durch die Durchbrüche 56 im äußeren Ring 46 ebenfalls etwas nach außen verschoben. Dadurch ragt der jeweilige Vorsprung 56 über den Außendurchmesser des äußeren Rings 46 hinaus. Auf diese Weise kann leicht erkannt werden, ob alle Rastelemente 38 eingerastet sind und die Verbindung in sicherer Weise hergestellt wurde oder nicht. Die Verwendung mehrerer Rastelemente 38 erlaubt ferner, die Anzeige, ob die Verbindung an allen Stellen ausreichend hergestellt ist.

Das vorstehend beschriebene Ausführungsbeispiel wurde konkret am Beispiel eines Filters und einer Anschlussarmatur mit einem Druckminderer und einem Manometer beschrieben. Es versteht sich, dass jedes wasserführende Bauteil mit einem weiteren wasserführenden Bauteil auf diese Weise verbunden werden kann. Die Erfindung ist nicht auf das beschriebene Ausführungsbeispiel beschränkt. So kann die Form der Durchbrüche, der Rastelemente und der Vorsprünge variiert werden. Es können etwa zylindrische Rastelemente in kreisförmigen Durchbrüchen vorgesehen sein, ohne vom Erfindungsgedanken abzuweichen. Es ist ferner möglich, die Stutzen derart einzusetzen, dass die Stutzen der Anschlussarmatur in Stutzen an dem Filter bzw. eines dort eingesetzten, wasserführenden Bauteils eingesetzt werden.

Die Erfindung ermöglicht es, die Verbindung auch in montiertem Zustand frei zu drehen. Es dürfen ferner unterschiedliche und insbesondere auch kostengünstigere Kunststoffmaterialien eingesetzt werden, da der Installateur die Verbindung nur noch durch Stecken herstellt und keine größeren Kräfte aufwendet, wie dies etwa bei Schraubverbindungen der Fall ist.

## Patentansprüche

1. Verbindungsanordnung zum Verbinden eines ersten wasserführenden Bauteils mit einem zweiten wasserführenden Bauteil, welche beide in einem Gehäuse einen Zentralkanal und einen um den Zentralkanal herum angeordneten Ringkanal aufweisen, **dadurch gekennzeichnet, dass**
(a) die zu verbindenden Bauteile jeweils einen inneren und einen äußeren, konzentrisch angeordneten Gehäusestutzen aufweisen, welche den Zentralkanal und den Ringkanal bilden;
(b) der innere Gehäusestutzen eines der Bauteile einen kleineren Außendurchmesser aufweist und in den inneren Gehäusestutzen des anderen Bauteils einsteckbar ist;
(c) der äußere Gehäusestutzen eines der Bauteile einen kleineren Außendurchmesser aufweist und in den äußeren Gehäusestutzen des anderen Bauteils einsteckbar ist;
(d) der äußere Gehäusestutzen mit dem kleineren Durchmesser im Verbindungsbereich eine innere Ringnut aufweist,
(e) der äußere Gehäusestutzen mit dem größeren Durchmesser im Bereich der Ringnut wenigstens einen Durchbruch aufweist, in welchen wenigstens ein Rastelement derart radialbeweglich und unter einer radialen Vorspannung eingesetzt ist, dass das Rastelement in die innere Ringnut einrastet, wenn die Bauteile zum Verbinden ineinander gesteckt werden.

2. Verbindungsanordnung nach Anspruch 1, **dadurch gekennzeichnet, dass** die Durchbrüche im äußeren Gehäusestutzen mit dem größeren Durchmesser im Bereich einer äußeren Ringnut an der Außenseite des äußeren Gehäusestutzens vorgesehen sind und ein elastischer Ring in der äußeren Ringnut vorgesehen ist, welcher die Vorspannung an dem Rastelement erzeugt.

3. Verbindungsanordnung nach Anspruch 1 oder 2, **dadurch gekennzeichnet, dass** das Rastelement und/oder der äußere Gehäusestutzen mit dem kleineren Durchmesser zum erleichterten Einstecken angeschrägt sind.

4. Verbindungsanordnung nach einem der vorgehenden Ansprüche, **dadurch gekennzeichnet, dass** Anzeigemittel vorgesehen sind, welche Anzeigen, wenn das Rastelement in der inneren Ringnut einrastet.

5. Verbindungsanordnung nach Anspruch 4, **dadurch gekennzeichnet, dass** die Anzeigemittel einen inneren Ring umfassen, welcher wenigstens einen an einer sich in Umfangsrichtung erstreckenden, radialbeweglichen Zunge befestigten Vorsprung im gleichen Winkelbereich wie das Rastelement aufweist und einen äußeren Ring mit einer Durchbruch im Bereich des Vorsprungs, in welchem der Vorsprung versenkt ist, wenn das Rastelement in der inneren Ringnut einrastet und über welchen der Vorsprung nach außen vorsteht, wenn das Rastelement nicht eingerastet ist.

6. Verbindungsanordnung nach einem der vorgehenden Ansprüche, **dadurch gekennzeichnet, dass** zumindest eines der Bauteile und/oder zumindest eines Komponenten aus der Gruppe bestehend aus Rastelement, innerer Ring und äußerer Ring aus Kunststoff gefertigt ist.

7. Verbindungsanordnung nach einem der vorgehenden Ansprüche, **dadurch gekennzeichnet, dass** eines der Bauteile eine Anschlussarmatur zur Installation in einer Trinkwasserrohrleitung ist.

8. Verbindungsanordnung nach einem der vorgehenden Ansprüche, **dadurch gekennzeichnet, dass** eines der Bauteile ausgewählt ist aus der Gruppe bestehend aus: Filter, Einrichungen zur Wasserenhärtung, Druckminderer, Druckminderer-Filterkombination, Sicherheitsarmaturen für Heizungseinrichtungen.

9. Wasserführendes Bauteil, insbesondere eine Anschlussarmatur zur Installation in einer Trinkwasserrohrleitung, ein Filter, eine Einrichtung zur Wasserenthärtung, ein Druckminderer, eine Druckminderer-Filterkombination oder eine Sicherheitsarmatur für Heizungsanlagen, wobei in einem Gehäuse ein Zentralkanal und ein um den Zentralkanal herum angeordneter Ringkanal vorgesehen ist, **dadurch gekennzeichnet, dass**
(a) das Gehäuse einen inneren und einen äußeren, konzentrisch angeordneten Gehäusestutzen aufweist, welche den Zentralkanal und den Ringkanal bilden;
(b) der innere Gehäusestutzen mit dem inneren Gehäusestutzen eines korrespondierenden Bauteils zusammensteckbar ist;
(c) der äußere Gehäusestutzen mit dem äußeren Gehäusestutzen eines korrespondierenden Bauteils zusammensteckbar ist; und
(d) der äußere Gehäusestutzen im Verbindungsbereich eine innere Ringnut zur Aufnahme eines Rastelements aufweist.

10. Bauteil nach Anspruch 9, **dadurch gekennzeichnet, dass** das Gehäuse aus Kunststoff gefertigt ist.
